(19) **Europäisches Patentamt / European Patent Office / Office européen des brevets**

(11) **EP 1 801 077 A1**

(12) **EUROPEAN PATENT APPLICATION**

(43) Date of publication:
**27.06.2007 Bulletin 2007/26**

(21) Application number: **05257926.5**

(22) Date of filing: **21.12.2005**

(51) Int Cl.:
*C02F 3/10* (2006.01)  *B01D 39/16* (2006.01)
*B01J 19/30* (2006.01)  *D04H 1/62* (2006.01)
*D04H 1/60* (2006.01)  *D04H 1/42* (2006.01)
*D04H 1/48* (2006.01)  *D04H 1/54* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **KANG NA HSIUNG ENTERPRISE CO., LTD.**
**Chia-Li Town**
**T'ai nan Hsien (TW)**

(72) Inventors:
• **Hu, Yen-Jung**
  **Hsin-Chu City (TW)**
• **Chen, Hsi-Yu**
  **Tainan City (TW)**
• **Lu, Wen-Yu**
  **Chia-Li town, Tainan Hsien (TW)**

(74) Representative: **Hackney, Nigel John et al**
**Mewburn Ellis LLP**
**York House**
**23 Kingsway**
**London WC2B 6HP (GB)**

(54) **Method for treating a contaminated fluid, system for treating a contaminated fluid, and method for making a biomass carrier suitable for treating a contaminated fluid**

(57)    A method for treating a contaminated fluid includes: preparing biomass-carrier pieces (32, 42) made from a fiber component selected from a non-woven fabric, a fiber bundle assembly (20), a bulky fiber bundle assembly (21), a woven fabric, and a braided strap; and mixing the biomass-carrier pieces (32, 42) with the contaminated fluid, so as to remove the contaminated parts of the contaminated fluid. A system (3, 4) for treating a contaminated fluid, and a method for making a biomass carrier suitable for treating a contaminated fluid are also disclosed. The biomass carrier thus made has a minimum thickness region at a bonding line (11, 12), so as to reinforce the structure of the biomass carrier, and a loose region surrounding the minimum thickness region, so as to improve attachment of microorganisms thereon and facilitate immersion into water.

FIG. 11

**Description**

This invention relates to a method for treating a contaminated fluid, more particularly to a method for treating a contaminated fluid by using biomass-carrier pieces. In addition, a system for treating the contaminated fluid, and a method for making a biomass carrier suitable for treating the contaminated fluid are also disclosed.

Conventional methods for treating a contaminated influent, such as wastewater or waste gas, include chemical and physical treatments, such as filtration or addition of chemicals. With the development of biotechnology, many biological methods that involve decomposition of contaminants in an influent by microorganisms have been proposed. However, since cell counts and survival time of the microorganisms are hard to control, in practice, an environment favorable to growth of the microorganisms is provided in these biological methods. In order to effectively control cell numbers of the microorganisms, the environment favorable to growth of the microorganisms is provided through a biomass carrier.

The traditional biomass carriers suitable for growth of microorganisms and decomposition of contaminants include an immobilized type of biomass carrier and a fixed-film type of biomass carrier. Chinese Utility Model application no. CN2132750Y discloses one example of the immobilized type of biomass carrier, which is in the form of a membrane carrier that includes a support layer made from a fabric web, two gel films attached to two sides of the support layer, respectively, and microorganisms and enzymes immobilized in the two gel films. Chinese Patent Publication no. CN1298018A discloses another example of the immobilized type of biomass carrier, which is in the form of a coated core carrier. The coated core carrier is prepared by the steps of : preparing a core made from an insoluble material; forming a coating on the surface of the core; activating the coating formed on the surface of the core; and bonding a biomaterial to the activated coating formed on the surface of the core. However, during manufacture of the immobilized type of biomass carrier, species of the microorganisms are chosen first based on the properties of the contaminants in the fluid to be treated, and the microorganisms of the chosen species are subsequently cultivated and proliferated and are finally immobilized in the biomass carrier. Therefore, the manufacture of the traditional immobilized type of biomass carrier is complicated, and the production cost is accordingly high.

As for the traditional fixed-film type of biomass carrier, European Patent no. 0433139 discloses a bed of biomass granulates used in a process for aerobic biological nitrification. The bed of biomass granulates includes support granulates based on carbonates, and nitrifying microorganisms adhered to the support granulates. However, effluent disposal through the bed of biomass granulates requires an aeration column, a biological nitrification reactor column, a setter column, and a debubbler column. Therefore, the process for aerobic biological nitrification of European Patent no. 0433139 is complicated and inefficient.

Canadian Patent no. 1217581 discloses an apparatus for the biological treatment of waste water that includes biomass, and carrier materials such as polyurethane foam particles used as a settling surface for the biomass. However, since pores of the polyurethane foam are not communicated with each other, it is difficult to make best use of such polyurethane foam. In addition, during operation of the apparatus of Canadian Patent no. 1217581, it takes a relatively long time to submerge the polyurethane foam in the wastewater, which results in relatively poor bio-treatment efficiency.

Taiwanese Patent Publication no. 513449 discloses a copolymer foam made from a copolymer of polyvinyl alcohol, chitosan and polyisocyanate. Active carbon powders are trapped in pores of the copolymer foam so as to facilitate growth of microorganisms. Production cost of the copolymer is not economical because of the need to prepare a prepolymer of chitosan and polyisocyanate.

Taiwanese Patent Publication no. 593168 discloses a method for treating wastewater with fixed-film microorganisms on porous carriers. The porous carriers include a polymer foam, and adsorbent particles selected from the group consisting of active carbon, diatomite, and zeolite and entrapped in pores of the polymer foam. However, manufacture of the porous carriers is relatively complicated since further hydrophilic treatments are required to reduce the time required for submerging the polymer foam in the wastewater.

Hence, there is a need in the art to provide a method and a system for treating a contaminated fluid by the use of biomass carriers which can be easily and economically produced, and a method for making the biomass carrier that is capable of being immersed in water quickly and that has a large surface area.

Therefore, the object of the present invention is to provide a method for treating a contaminated fluid, a system for treating a contaminated fluid, and a method for making a biomass carrier suitable for treating a contaminated fluid that can alleviate at least one of the aforesaid drawbacks of the prior art.

According to one aspect of this invention, a method for treating a contaminated fluid includes preparing biomass-carrier pieces, each of which is independently made from a fiber component selected from the group consisting of a non-woven fabric, a fiber bundle assembly, a bulky fiber bundle assembly, a woven fabric, and a braided strap, and mixing the biomass-carrier pieces with the contaminated fluid.

According to another aspect of this invention, a system for treating a contaminated fluid includes a tank for receiving the contaminated fluid, and biomass-carrier pieces disposed in the tank for contacting the contaminated fluid. Each of the biomass-carrier pieces is independently made from a fiber component selected from the group consisting of a non-woven fabric, a fiber bundle assembly, a bulky fiber bundle assembly, a woven fabric and a braided strap.

According to yet another aspect of this invention, a method for making a biomass carrier suitable for treating a contaminated fluid includes: preparing a fiber bale essentially consisted of fibers; opening and scutching the fiber bale; carding the opened and scutched fiber bale so as to form a loosened fiber web; lapping a plurality of the loosened fiber webs to a predetermined thickness; consolidating the fibers of the loosened fiber webs so as to form the loosened fiber webs into a non-woven fabric; and structurally reinforcing the non-woven fabric by bonding the fibers of the non-woven fabric along at least one bonding line such that the thickness of the non-woven fabric is smallest at the bonding line.

Other features and advantages of the present invention will become apparent in the following detailed description of the preferred embodiments of this invention, with reference to the accompanying drawings, in which:

Fig. 1 is a perspective view of the first preferred embodiment of a fiber component used in the preferred embodiment of a method for treating a contaminated fluid according to this invention;

Fig. 2 is a perspective view of the second preferred embodiment of a fiber component used in the preferred embodiment of a method for treating a contaminated fluid according to this invention;

Fig. 3 is a perspective view of the third preferred embodiment of a fiber component used in the preferred embodiment of a method for treating a contaminated fluid according to this invention;

Fig. 4 is a perspective view of the fourth preferred embodiment of a fiber component used in the preferred embodiment of a method for treating a contaminated fluid according to this invention;

Fig. 5 is a perspective view of the fifth preferred embodiment of a fiber component used in the preferred embodiment of a method for treating a contaminated fluid according to this invention;

Fig. 6 is a flow diagram to illustrate consecutive steps of the first preferred embodiment of a method for making a biomass carrier suitable for treating a contaminated fluid according to this invention;

Fig. 7 is a perspective view of the first prepared embodiment of a method for making a biomass carrier according to this invention, illustrating how a non-woven fabric is structurally reinforced through bonding along two bonding lines parallel to a longitudinal direction of the non-woven fabric, and how the reinforced non-woven fabric is cut in a direction transverse to the longitudinal direction of the non-woven fabric;

Fig. 8 is a perspective view of the second preferred embodiment of a method for making a biomass carrier according to this invention, illustrating how a non-woven fabric is structurally reinforced through bonding along one bonding line parallel to a longitudinal direction of the non-woven fabric, and how the reinforced non-woven fabric is cut in a direction transverse to the longitudinal direction of the non-woven fabric;

Fig. 9 is a perspective view of the third preferred embodiment of a method for making a biomass carrier according to this invention, illustrating how a non-woven fabric is structurally reinforced through bonding along a plurality of bonding lines transverse to a longitudinal direction of the non-woven fabric, and how the reinforced non-woven fabric is cut in a direction transverse to the longitudinal direction of the non-woven fabric;

Fig. 10 is a perspective view of the fourth preferred embodiment of a method for making a biomass carrier according to this invention, illustrating how a non-woven fabric is structurally reinforced through bonding along a plurality of bonding lines transverse to a longitudinal direction of the non-woven fabric, and how the reinforced non-woven fabric is cut in directions parallel and transverse to the longitudinal direction of the non-woven fabric;

Fig. 11 is a schematic view to illustrate the first preferred embodiment of a system for treating a contaminated fluid according to this invention; and

Fig. 12 is a schematic view to illustrate the second preferred embodiment of a system for treating a contaminated fluid according to this invention.

The preferred embodiment of a method for treating a contaminated fluid according to this invention includes preparing biomass-carrier pieces, and mixing the biomass-carrier pieces with the contaminated fluid. Each of the biomass-carrier pieces is independently made from a fiber component selected from the group consisting of a non-woven fabric, a fiber bundle assembly, a bulky fiber bundle assembly, a woven fabric, and a braided strap.

The term "contaminated fluid" as used herein means a fluid containing contaminants such as biodegradable contaminants or suspended solids, and includes waste gases, or wastewater, such as industrial wastewater and domestic wastewater.

Preferably, during the mixing of the biomass-carrier pieces with the contaminated fluid, the biomass-carrier pieces are freely suspended in the contaminated fluid, and move with the flow of the contaminated fluid, so as to enhance the contact between the contaminated fluid and the biomass-carrier pieces. Alternatively, the biomass-carrier pieces can be collected together, and subsequently brought into contact with the contaminated fluid in an unmovable manner. During contact of the biomass-carrier pieces with the contaminated fluid, the contaminants in the contaminated fluid will be decomposed or entrapped by the biomass-carrier pieces.

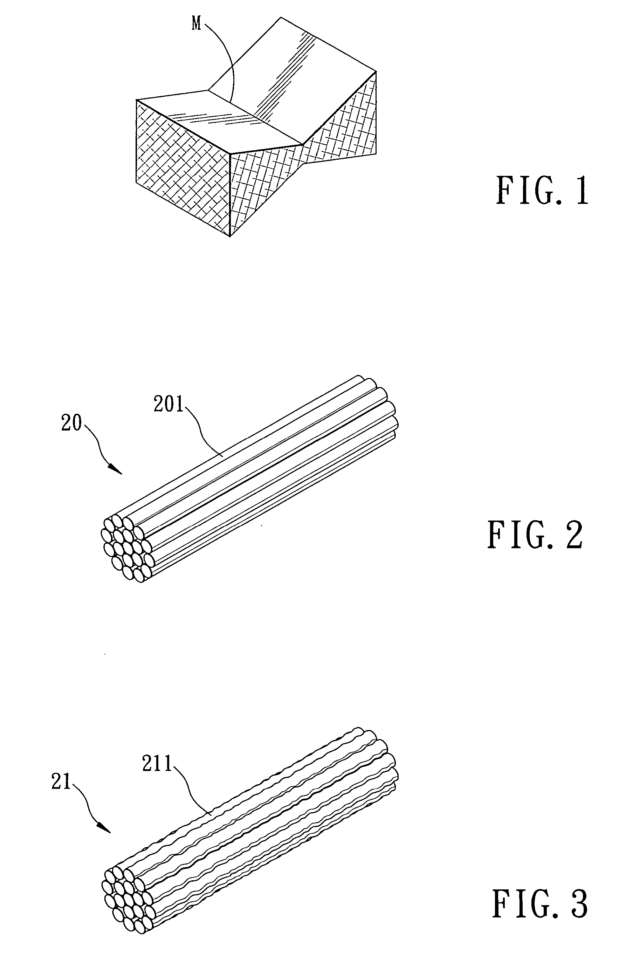

Volume of the biomass-carrier pieces vary based on the volume of the contaminated fluid to be treated. The first preferred embodiment of the fiber component used for making the biomass-carrier pieces is made of a non-woven fabric. The non-woven fabric preferably has a shape selected from the group consisting of a cylinder and a polyhedral prism, such as a pentagonal prism or a hexagonal prism. Referring to Fig. 1, the first preferred embodiment of the fiber component is structurally reinforced through formation of a bonding line (M) in such a manner that the thickness of each of the biomass-carrier pieces is smallest at the bonding line (M).

Referring to Fig. 2, the second preferred embodiment of the fiber component used for making the biomass-carrier pieces is a fiber bundle assembly 20. The fiber bundle assembly 20 is prepared by doubling and consolidating a plurality of fiber bundles 201, followed by cutting the doubled and consolidated fiber bundles 201.

Referring to Fig. 3, the third preferred embodiment of the fiber component used for making the biomass-carrier pieces is a bulky fiber bundle assembly 21. The bulky fiber bundle assembly 21 is prepared by texturing, doubling and consolidating a plurality of bulky fiber bundles 211, followed by cutting the bulky fiber bundles 211.

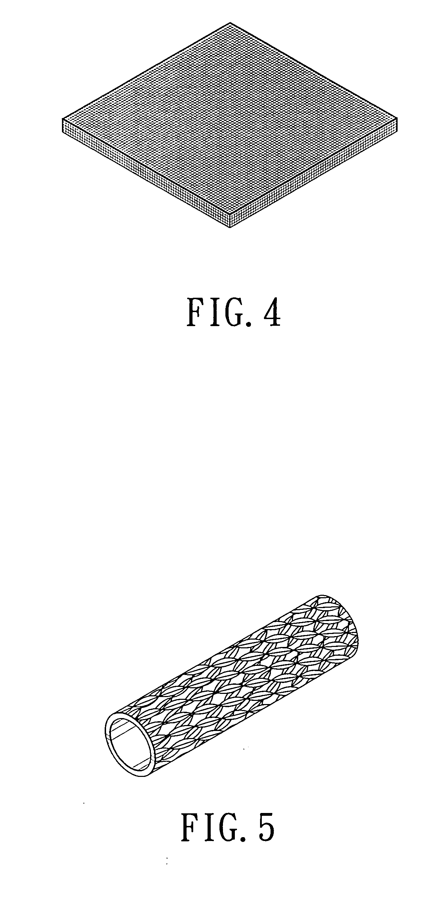

Referring to Fig. 4, the fourth preferred embodiment of the fiber component used for making the biomass-carrier pieces is a woven fabric. The woven fabric is prepared by weaving and consolidating processes, followed by cutting the consolidated woven fabric.

Referring to Fig. 5, the fifth preferred embodiment of the fiber component used for making the biomass-carrier pieces is a braided strap. The braided strap is prepared by braiding and consolidating processes, followed by cutting the braided and consolidated strap.

Preferably, the biomass-carrier pieces have a total apparent volume percentage ranging from 10% to 90% based on the volume of the contaminated fluid. More preferably, the biomass-carrier pieces have a total apparent volume percentage ranging from 50% to 80% based on the volume of the contaminated fluid.

In addition, the fiber component is preferably made from a polymer selected from the group consisting of polyester, polycarbonate, polyamide, polyolefin, polyacrylate, polyethylene glycol, polyvinyl chloride, polyvinyl fluoride, polystyrene, and combinations thereof. More preferably, the fiber component is made from a polymer selected from the group consisting of polyethylene, polypropylene, polyethylene terethphalate, polymethyl methacrylate, polycarbonate, polystyrene, and combinations thereof.

The preferred embodiment of a method for treating a contaminated fluid according to this invention further includes a seeding process, i.e., treating the biomass-carrier pieces with a mixture of an active sludge and clear water prior to the mixing of the biomass-carrier pieces with the contaminated fluid. Acclimation of the active sludge on the biomass-carrier pieces can be conducted under an aerobic or anaerobic environment for 4 to 8 hours based on the method used in the active sludge treatment known in the art.

Alternatively, the preferred embodiment of a method for treating a contaminated fluid according to this invention further includes the step of adding an additive, such as a chemical reagent or a photocatalyst, into the contaminated fluid to enhance treatment efficiency.

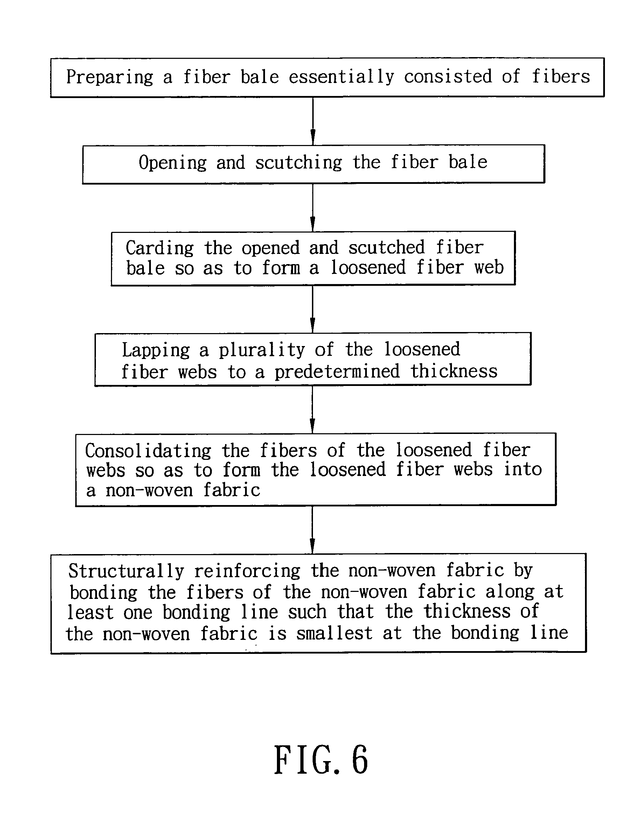

Referring to Fig. 6, the first preferred embodiment of a method for making a biomass carrier suitable for treating a contaminated fluid according to this invention includes the steps of: preparing a fiber bale essentially consisted of fibers; opening and scutching the fiber bale; carding the opened and scutched fiber bale so as to form a loosened fiber web; lapping a plurality of the loosened fiber webs to a predetermined thickness; consolidating the fibers of the loosened fiber webs so as to form the loosened fiber webs into a non-woven fabric; and structurally reinforcing the non-woven fabric by bonding the fibers of the non-woven fabric along at least one bonding line such that the thickness of the non-woven fabric is smallest at the bonding line.

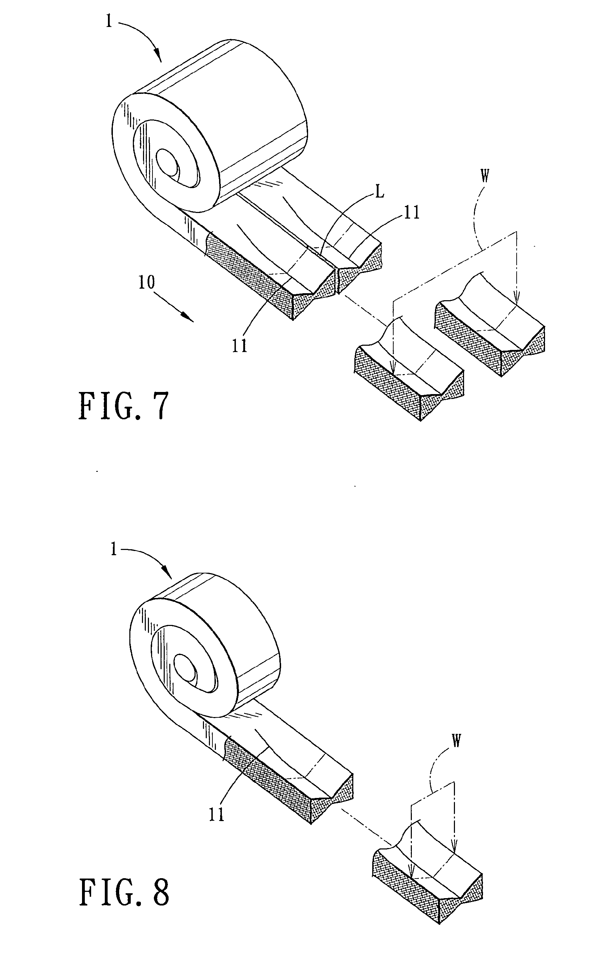

In the first preferred embodiment shown in Fig. 7, the non-woven fabric is formed into a roll 1 after the consolidating operation. The roll 1 of the non-woven fabric is formed with two of the bonding lines 11 after the reinforcing operation. Preferably, the bonding lines 11 are parallel to each other and to a longitudinal direction of the non-woven fabric (as indicated by an arrow 10) . Preferably, the bonding lines 11 are separated from each other by a distance ranging from 0.5 to 5 centimeters.

The porous non-woven fabric is first cut along a cutting line (L) that is positioned between the bonding lines 11 and that is parallel to the longitudinal direction of the non-woven fabric, and is subsequently cut along cutting lines (W) that are transverse to the longitudinal direction of the non-woven fabric. The biomass carriers obtained after the cutting process have a shape similar to that of the fiber component shown in Fig. 1. Each of the biomass carriers includes a minimum thickness region formed by the bonding line 11 and a loose region surrounding the minimum thickness region. The loose region is adapted for attachment by microorganisms useful for bio-treatments. Preferably, each of the biomass carriers is 1.5 cm in width, 1.5 cm in length and 1.5 cm in maximum thickness at two ends.

Preferably, the consolidating operation of the fibers of the loosened fiber webs is conducted through a technique selected from the group consisting of chemical bonding, thermal bonding, water-jet entangling, and needle punching. For example, the fibers of the loosened fiber webs can be consolidated through thermal bonding at a temperature of 135°C for about 6 seconds, so as to form the non-woven fabric.

Preferably, the bonding operation of the fibers of the non-woven fabric is conducted through a technique selected from the group consisting of stitching, thermal bonding, and ultrasonic bonding.

In addition, each of the fibers of the fiber bale is preferably made from a single-component material selected from the group consisting of polyester, polycarbonate, polyamide, polyolefin, polyacrylate, polyethylene glycol, polyvinyl chloride, polyvinyl fluoride, polystyrene, and combinations thereof. More preferably, each of the fibers of the fiber bale is made from a single-component material selected from the group consisting of polyethylene, polypropylene, polyethylene terethphalate, polymethyl methacrylate, polycarbonate, polystyrene, and combinations thereof.

Alternatively, each of the fibers of the fiber bale is preferably made from a sheath/core type bicomponent fiber that includes a first component and a second component having a melting point 10°C higher than that of the first component. More preferably, the first component is polypropylene, and the second component is polyethylene.

Referring to Fig. 8, the second preferred embodiment of the method of this invention is shown to be similar to the first preferred embodiment, except that the non-woven fabric is structurally reinforced through bonding along one bonding line 11.

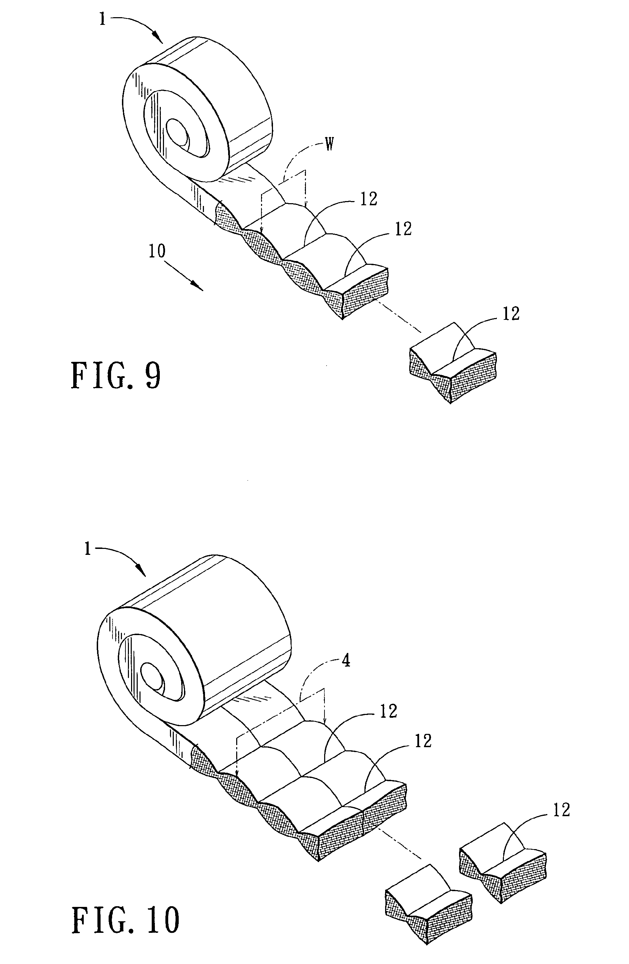

Referring to Fig. 9, the third preferred embodiment of the method of this invention is shown to be similar to the first preferred embodiment, except that the non-woven fabric is structurally reinforced through bonding along a plurality of bonding lines 12, each of which is transverse to the longitudinal direction of the non-woven fabric, and that the reinforced non-woven fabric is cut along a plurality of cutting lines (W), each of which is positioned between two adjacent bonding lines 12.

Referring to Fig. 10, the fourth preferred embodiment of the method of this invention is shown to be similar to the third preferred embodiment, except that the reinforced non-woven fabric is cut along a plurality of first cutting lines (W), each of which is positioned between two adjacent bonding lines 12. The reinforced non-woven fabric is also cut along the longitudinal direction of the non-woven fabric.

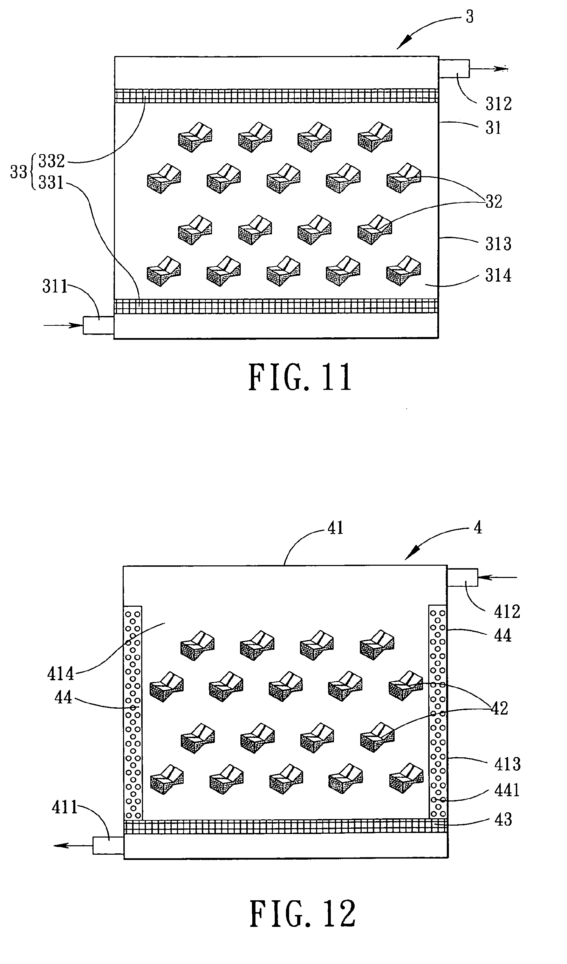

Referring to Fig. 11, the first preferred embodiment of a system 3 for treating a contaminated fluid according to this invention includes a tank 31 for receiving the contaminated fluid, and biomass-carrier pieces 32 disposed in the tank 31 for contacting the contaminated fluid. Each of the biomass-carrier pieces 32 is independently made from a fiber component selected from the group consisting of a non-woven fabric, a fiber bundle assembly 20, a bulky fiber bundle assembly 21, a woven fabric and a knitted fiber strap.

In addition, the tank 31 includes an inlet 311 disposed in a bottom portion of the tank 31, an outlet 312 disposed in a top portion of the tank 31 and opposite to the inlet 311, and a separator unit 33 disposed between the inlet 311 and the outlet 312. The separator unit 33 includes a first porous plate 331 located downstream of the inlet 311, and a second porous plate 332 located upstream of the outlet 312. The biomass-carrier pieces 32 are freely suspended in the contaminated fluid in the space 314 confined by first and second porous plates 331, 332 and the peripheral wall 313 of the tank 31.

By virtue of the arrangement of the inlet 311 and the outlet 312, the contaminated fluid can be brought into contact with the biomass-carrier pieces 32, and the time spent by the contaminated fluid in the tank 31 can be increased.

Preferably, the biomass-carrier pieces 32 have a total apparent volume percentage ranging from 10% to 90% based on the volume of the contaminated fluid. More preferably, the biomass-carrier pieces 32 have a total apparent volume percentage ranging from 50% to 80% based on the volume of the contaminated fluid.

Optionally, each of the biomass-carrier pieces 32 is treated with a mixture of an active sludge and clean water.

Referring to Fig. 12, the second preferred embodiment of a system 4 for treating a contaminated fluid according to this invention includes a tank 41 for receiving the contaminated fluid, and biomass-carrier pieces 42 disposed in the tank 41 for contacting the contaminated fluid. Each of the biomass-carrier pieces 42 is independently made from a fiber component similar to the fiber component used for making the biomass-carrier pieces 32 of the first preferred embodiment.

In addition, the tank 41 includes an outlet 411 disposed in the bottom portion of the tank 41, an inlet 412 disposed in the upper portion of the tank 41 and opposite to the outlet 411, a porous plate 43 disposed upstream of the outlet 411 and downstream of the inlet 412, and a diffuser 44 disposed around the peripheral wall 413 of the tank 41 and upstream of the porous plate 43.

The biomass-carrier pieces 42 are freely suspended in the space 414 that is below the inlet 412 and that is confined by the porous plate 43 and the diffuser 44. Gas provided by the diffuser 44 through holes 441 assists in ensuring sufficient contact of the contaminated fluid with the biomass-carrier pieces 42. Cleaning of the biomass-carrier pieces 42 is conducted through a backwash process.

## EXAMPLES

Example 1 --- Preparation of biomass carriers

A core-sheath type bicomponent fiber that includes a first component of polyethylene and a second component of polypropylene (trade name: SP-2650EP, available from Far Eastern Textile Ltd., Taiwan) was used in the preparation of the biomass carriers. The core-sheath type bicomponent fiber had a fiber fineness of 6 deniers and a length of 5.1 cm. Initially, the fibers were opened, scutched, carded, and lapped, so as to form loosened fiber webs. The loosened fiber webs were consolidated by needle punching and hot-air processing to form a non-woven fabric that had a basis weight of 500 g/m$^2$ and a width of 1.8 m. The non-woven fabric was subsequently cut along a longitudinal direction thereof into a plurality of non-woven strips, each of which had a width of 0.6 m. Each of the non-woven strips was structurally reinforced by bonding along a plurality of bonding lines parallel to the longitudinal direction of the non-woven strip such that the thickness of the non-woven strip was smallest at each of the bonding lines. The bonding lines were parallel to each other and were separated from each other by a distance of 3 cm. Each of the non-woven strips was then cut along a plurality of first cutting lines (L), each of which was positioned between two adjacent bonding lines, and was further cut along a plurality of second cutting lines (W) transverse to the longitudinal direction of the non-woven strip, so as to form a plurality of biomass carriers, each of which was 1.5 cm long and 1.5 cm wide, and each of which had a maximum height of 1.5 cm at two ends thereof.

Example 2 --- Use of the biomass carriers obtained from Example 1 in a system for treating a contaminated fluid

The biomass carriers 42 obtained from Example 1 were then used in the system 4 for treating a contaminated fluid shown in Fig. 12. The tank 41 of the system 4 was available for receiving 500 liters of a contaminated fluid. 300 liters of the contaminated fluid having a turbidity of 11800 NTU (Nephelometric Turbidity Unit) was pumped into the tank 41 though the inlet 412. Each of the biomass carriers obtained from Example 1 has an apparent volume of 3.375 cm$^3$. The total apparent percentage of the biomass carriers was 80% based on the volume of the contaminated fluid, i.e., 240 liters.

A flow meter for controlling inflow volume and rate of the contaminated fluid (not shown in Fig. 12) was mounted at the inlet 412. The turbidity of the contaminated fluid that flowed into the system 4 (Turbidity $_{before\ treatment}$) and the turbidity of the contaminated fluid that flowed out of the system 4 (Turbidity $_{after\ treatment}$) were measured, and reduction percentage (%) in the turbidity of the contaminated fluid was calculated according to the following formula. The results are shown in Table I:

Reduction percentage in the turbidity (%) =

[(Turbidity $_{after\ treatment}$ - Turbidity $_{before\ treatment}$)/Turbidity $_{before\ treatment}$]×100%

Table I

| Test No. | Inflow rate of the contaminated fluid (m$^3$/day) | Turbidity $_{after\ treatment}$ (NTU) | Reduction percentage of the turbidity (%) |
|---|---|---|---|
| 1 | 22 | 1100 | 90.7 |
| 2 | 35 | 2500 | 78.8 |

Example 3 --- Use of the biomass carriers obtained from Example 1 in a system for treating a contaminated fluid

The biomass carriers 32 obtained from Example 1 were then used in the system 3 for treating a contaminated fluid shown in Fig. 11. The biomass carriers 32 were treated with a mixture of an active sludge and clean water in the tank 31 in advance for 8 hours. The active sludge was obtained from a wastewater recovery tank of a laundry plant. The contaminated fluid was retained in the tank 31 for 12 hours. The chemical oxygen demand (COD) value and suspended solid (SS) values of the contaminated fluid that flowed into and out of the system 3 were measured. It was found that after being treated by the system 3, the COD value of the contaminated fluid was reduced from 210 mg/L to 72 mg/L and the SS value of the contaminated fluid was reduced from 168 mg/L to 15 mg/L.

The results of the Examples show that the biomass-carrier pieces 32, 42 can serve as a filter and are efficient in removing suspended solids from contaminated fluid, and that the biomass-carrier pieces 32, 42 can provide a large surface area for attachment of the microorganisms which can enhance bio-decomposition of organic substances in the contaminated fluid.

**Claims**

1.    A method for treating a contaminated fluid,

**characterized by**
preparing biomass-carrier pieces (32, 42), each of which is independently made from a fiber component selected from the group consisting of a non-woven fabric, a fiber bundle assembly (20), abulkyfiberbundleassembly (21), a woven fabric, and a braided strap; and
mixing the biomass-carrier pieces (32, 42) with the contaminated fluid.

2. The method of claim 1, **characterized in that** the biomass-carrier pieces (32, 42) are freely suspended in the contaminated fluid.

3. The method of claim 1, **characterized in that** each of the biomass-carrier pieces (32, 42) has a shape selected from the group consisting of a cylinder and a polyhedral prism.

4. The method of claim 1, **characterized in that** each of the biomass-carrier pieces (32, 42) is structurally reinforced through formation of a bonding line (M, 11, 12) in such a manner that the thickness of each of the biomass-carrier pieces (32, 42) is smallest at the bonding line (M, 11, 12).

5. The method of claim 1, **characterized in that** the biomass-carrier pieces (32, 42) have a total apparent volume percentage ranging from 10% to 90% based on the volume of the contaminated fluid.

6. The method of claim 5, **characterized in that** the biomass-carrier pieces (32, 42) have a total apparent volume percentage ranging from 50% to 80% based on the volume of the contaminated fluid.

7. The method of claim 1, **characterized in that** the fiber component is made from a polymer selected from the group consisting of polyester, polycarbonate, polyamide, polyolefin, polyacrylate, polyethylene glycol, polyvinyl chloride, polyvinyl fluoride, polystyrene, and combinations thereof.

8. The method of claim 1, **characterized in that** the fiber component is made from a polymer selected from the group consisting of polyethylene, polypropylene, polyethylene terethphalate, polymethyl methacrylate, polycarbonate, polystyrene, and combinations thereof.

9. The method of claim 1, further **characterized by** a seeding process of treating the biomass-carrier pieces (32, 42) with a mixture of an active sludge and clear water prior to the mixing of the biomass-carrier pieces (32, 42) with the contaminated fluid.

10. A system (3, 4) for treating a contaminated fluid,
**characterized by**
a tank (31, 41) for receiving the contaminated fluid; and
biomass-carrier pieces (32, 42) disposed in said tank (31, 41) for contacting the contaminated fluid,
wherein each of said biomass-carrier pieces (32, 42) is independently made from a fiber component selected from the group consisting of a non-woven fabric, a fiber bundle assembly (20), a bulky fiber bundle assembly (21), a woven fabric and a braided strap.

11. The system (3, 4) of claim 10, **characterized in that** said biomass-carrier pieces (32, 42) have a total apparent volume percentage ranging from 10% to 90% based on the volume of the contaminated fluid.

12. The system (3, 4) of claim 11, **characterized in that** said biomass-carrier pieces (32, 42) have a total apparent volume percentage ranging from 50% to 80% based on the volume of the contaminated fluid.

13. The system (3, 4) of claim 10, **characterized in that** each of said biomass-carrier pieces (32, 42) is treated with a mixture of an active sludge and clear water.

14. A method for making a biomass carrier suitable for treating a contaminated fluid, **characterized by**
preparing a fiber bale consisted essentially of fibers; opening and scutching the fiber bale;
carding the opened and scutched fiber bale so as to form a loosened fiber web;
lapping a plurality of the loosened fiber webs to a predetermined thickness;
consolidating the fibers of the loosened fiber webs so as to form the loosened fiber webs into anon-woven fabric; and
structurally reinforcing the non-woven fabric by bonding the fibers of the non-woven fabric along at least one bonding line (11, 12) such that the thickness of the non-woven fabric is smallest at the bonding line (11, 12).

**15.** The method of claim 14, **characterized in that** the non-woven fabric is formed with two of the bonding lines (11) after the reinforcing operation, the bonding lines (11) being parallel to each other and being separated from each other by a distance ranging from 0.5 to 5 centimeters.

**16.** The method of claim 14, **characterized in that** the non-woven fabric is in the form of a roll (1), the bonding line (11) being parallel to a longitudinal direction (10) of the non-woven fabric in an extended state.

**17.** The method of claim 14, **characterized in that** the bonding line (12) is transverse to a longitudinal direction (10) of the non-woven fabric in an extended state.

**18.** The method of claim 14, **characterized in that** each of the fibers of the fiber bale is made from a single-component material selected from the group consisting of polyester, polycarbonate, polyamide, polyolefin, polyacrylate, polyethylene glycol, polyvinyl chloride, polyvinyl fluoride, polystyrene, and combinations thereof.

**19.** The method of claim 14, **characterized in that** each of the fibers of the fiber bale is made from a single-component material selected from the group consisting of polyethylene, polypropylene, polyethylene terethphalate, polymethyl methacrylate, polycarbonate, polystyrene, and combinations thereof.

**20.** The method of claim 14, **characterized in that** each of the fibers of the fiber bale is made from a sheath/core type bicomponent fiber that includes a first component and a second component having a melting point 10°C higher than that of the first component.

**21.** The method as claimed in claim 20, **characterized in that** the first component is polypropylene, and the second component is polyethylene.

**22.** The method as claimed in claim 14, **characterized in that** the consolidating operation is conducted through a technique selected from the group consisting of chemical bonding, thermal bonding, water-jet entangling, and needle punching.

**23.** The method as claimed in claim 14, **characterized in that** the bonding operation is conducted through a technique selected from the group consisting of stitching, thermal bonding, and ultrasonic bonding.

FIG. 1

FIG. 2

FIG. 3

FIG. 4

FIG. 5

Preparing a fiber bale essentially consisted of fibers

↓

Opening and scutching the fiber bale

↓

Carding the opened and scutched fiber
bale so as to form a loosened fiber web

↓

Lapping a plurality of the loosened
fiber webs to a predetermined thickness

↓

Consolidating the fibers of the loosened fiber
webs so as to form the loosened fiber webs into
a non-woven fabric

↓

Structurally reinforcing the non-woven fabric by
bonding the fibers of the non-woven fabric along at
least one bonding line such that the thickness of
the non-woven fabric is smallest at the bonding line

# FIG. 6

FIG. 7

FIG. 8

FIG. 9

FIG. 10

FIG. 11

FIG. 12

EP 1 801 077 A1

**European Patent Office**

**EUROPEAN SEARCH REPORT**

Application Number

EP 05 25 7926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 35 16 617 A1 (TETRA WERKE DR.RER.NAT. ULRICH BAENSCH GMBH) 13 November 1986 (1986-11-13) | 1-3,5-8, 10-12 | INV. C02F3/10 B01D39/16 |
| Y | * page 11, paragraph SECOND; claims 1,2; figures I,IVd * | 1-13 | B01J19/30 D04H1/62 D04H1/60 |
| X | US 6 063 268 A (JOWETT ET AL) 16 May 2000 (2000-05-16) | 1-6, 10-12 | D04H1/42 D04H1/48 |
| Y | * column 12, lines 20-59; claim 1; figure 5 * | 1-13 | D04H1/54 |
| X | US 6 153 094 A (JOWETT ET AL) 28 November 2000 (2000-11-28) | 1-6, 10-12 | |
| Y | * column 22, line 55 - column 23, line 41; claim 1; figure 18 * | 1-13 | |
| X | EP 1 234 804 A (ROS ROCA, S.A) 28 August 2002 (2002-08-28) * paragraphs [0021] - [0024]; claims 1,2,10 * | 1,10 | |
| X | DE 201 12 905 U1 (BKP BEROLINA POLYESTER GMBH & CO. KG) 11 October 2001 (2001-10-11) * claims 1,12,13 * | 1,10 | TECHNICAL FIELDS SEARCHED (IPC) C02F B01D D04H B01J |
| X | DE 195 19 325 A1 (GESELLSCHAFT ZUM BETRIEB VON AUTOWASCHANLAGEN MBH, 86850 FISCHACH, DE) 28 November 1996 (1996-11-28) * claims 1-3 * | 1,10 | |
| X | EP 0 165 862 A (INSTITUT NATIONAL DE RECHERCHE CHIMIQUE APPLIQUEE) 27 December 1985 (1985-12-27) * claim 1; figure 1 * | 1,10 | |

-/--

~~The present search report has been drawn up for all claims~~

| Place of search | Date of completion of the search | Examiner |
|---|---|---|
| Munich | 6 June 2006 | VAN IDDEKINGE, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 05 25 7926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 681 798 A (ARMAGNAC AQUACULTURE TRAITEM EAU; ARMAGNAC AQUACULTURE TRAITEM E) 2 April 1993 (1993-04-02) * claim 1; figure 1 * | 1,10 | |
| X | EP 0 949 209 A (ROS ROCA, S.A) 13 October 1999 (1999-10-13) * paragraph [0029]; claims 1,11-14 * | 1,10 | |
| X | US 4 451 362 A (SPELSBERG ET AL) 29 May 1984 (1984-05-29) * column 2, line 33 - column 3, line 28; claims 1-18; figures 1-5 * | 1,10 | |
| X | US 4 088 571 A (HELGESSON ET AL) 9 May 1978 (1978-05-09) * column 2, lines 6-24; claims 1,9 * | 1,10 | |
| X | WO 2004/071973 A (ZENON ENVIRONMENTAL INC; COTE, PIERRE; HUSAIN, HIDAYAT; TOWE, IAN, G;) 26 August 2004 (2004-08-26) * paragraphs [0006], [0052] - [0054], [0061] - [0063], [0065], [0101]; claims 1,9,12-14,21; figure 19a * | 1,10 | TECHNICAL FIELDS SEARCHED (IPC) |
| X | DE 202 02 300 U1 (THUERINGISCHES INSTITUT FUER TEXTIL- UND KUNSTSTOFF-FORSCHUNG E.V; HOC) 13 June 2002 (2002-06-13) * page 12, lines 2-26; claims 1-9 * | 1,10 | |
| X | US 4 576 716 A (IDA ET AL) 18 March 1986 (1986-03-18) * column 1, lines 10-15 * * column 3, lines 1-54; claim 1; figures 2,3a,3b * | 1,10 | |

-/--

~~The present search report has been drawn up for all claims~~

| Place of search | Date of completion of the search | Examiner |
|---|---|---|
| Munich | 6 June 2006 | VAN IDDEKINGE, R |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

**European Patent Office**

**EUROPEAN SEARCH REPORT**

Application Number

EP 05 25 7926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 574 922 A (NIIGATA ENG CO LTD) 10 September 1980 (1980-09-10) * page 3, lines 18-53; claims 1-9 * | 1,10 | |
| X | DE 42 33 121 A1 (RAUSCH, WALTER, DR.-ING., 90518 ALTDORF, DE) 7 April 1994 (1994-04-07) * claims 1-5 * | 1,10 | |
| A | E. FAHRBACH ET AL: "Nonwoven Fabrics" [Online] 15 June 2000 (2000-06-15), WILEY-VCH VERLAG GMBH , XP002383991 Ullmann's Encyclopedia of Industrial Chemistry Retrieved from the Internet: URL:http://www.mrw.interscience.wiley.com/ueic/articles/a17_565/pdf_fs.html> * paragraphs [03.2] - [3.2.3] * | 1-13 | |

TECHNICAL FIELDS SEARCHED (IPC)

~~The present search report has been drawn up for all claims~~

| Place of search | Date of completion of the search | Examiner |
|---|---|---|
| Munich | 6 June 2006 | VAN IDDEKINGE, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 05 25 7926

**CLAIMS INCURRING FEES**

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13

European Patent
Office

**LACK OF UNITY OF INVENTION
SHEET B**

Application Number

EP 05 25 7926

The Search Division considers that the present European patent application does not comply with the requirements of unity of invention and relates to several inventions or groups of inventions, namely:

1. claims: 1-13

   method and system for treating a contaminated fluid by means of a biomass carrier consisting of a non-woven fabric
   ---

2. claims: 1-13

   method and system for treating a contaminated fluid by means of a biomass carrier consisting of a fiber bundle assembly
   ---

3. claims: 1-13

   method and system for treating a contaminated fluid by means of a biomass carrier consisting of a woven fabric
   ---

4. claims: 1-13

   method and system for treating a contaminated fluid by means of a biomass carrier consisting of a braided strap
   ---

5. claims: 14-23

   method of making a biomass carrier
   ---

## ANNEX TO THE EUROPEAN SEARCH REPORT
## ON EUROPEAN PATENT APPLICATION NO.

EP 05 25 7926

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2006

| Patent document cited in search report | | Publication date | Patent family member(s) | | Publication date |
|---|---|---|---|---|---|
| DE 3516617 | A1 | 13-11-1986 | NONE | | |
| US 6063268 | A | 16-05-2000 | NONE | | |
| US 6153094 | A | 28-11-2000 | NONE | | |
| EP 1234804 | A | 28-08-2002 | ES | 1048267 U1 | 01-07-2001 |
| DE 20112905 | U1 | 11-10-2001 | NONE | | |
| DE 19519325 | A1 | 28-11-1996 | NONE | | |
| EP 0165862 | A | 27-12-1985 | AU | 578477 B2 | 27-10-1988 |
| | | | AU | 4341485 A | 19-12-1985 |
| | | | CA | 1256089 A1 | 20-06-1989 |
| | | | DE | 3564772 D1 | 13-10-1988 |
| | | | ES | 296137 U | 16-12-1987 |
| | | | FR | 2565841 A1 | 20-12-1985 |
| | | | GR | 851448 A1 | 25-11-1985 |
| | | | JP | 61082804 A | 26-04-1986 |
| | | | PT | 80633 A | 01-07-1985 |
| | | | ZA | 8504236 A | 30-04-1986 |
| FR 2681798 | A | 02-04-1993 | AU | 2762092 A | 27-04-1993 |
| | | | WO | 9305876 A1 | 01-04-1993 |
| EP 0949209 | A | 13-10-1999 | NONE | | |
| US 4451362 | A | 29-05-1984 | DE | 3047967 A1 | 15-07-1982 |
| | | | EP | 0056083 A1 | 21-07-1982 |
| US 4088571 | A | 09-05-1978 | JP | 1046121 C | 28-05-1981 |
| | | | JP | 52071866 A | 15-06-1977 |
| | | | JP | 55037315 B | 26-09-1980 |
| | | | SE | 397336 B | 31-10-1977 |
| | | | SE | 7502306 A | 30-08-1976 |
| WO 2004071973 | A | 26-08-2004 | AU | 2004210726 A1 | 26-08-2004 |
| | | | EP | 1594807 A1 | 16-11-2005 |
| DE 20202300 | U1 | 13-06-2002 | NONE | | |
| US 4576716 | A | 18-03-1986 | DE | 3151107 A1 | 19-08-1982 |
| | | | FR | 2497118 A1 | 02-07-1982 |
| | | | GB | 2091303 A | 28-07-1982 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 05 25 7926

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2006

| Patent document cited in search report | | Publication date | Patent family member(s) | | Publication date |
|---|---|---|---|---|---|
| GB 1574922 | A | 10-09-1980 | AU | 2907977 A | 29-03-1979 |
| | | | DE | 2742894 A1 | 30-03-1978 |
| | | | FR | 2365528 A1 | 21-04-1978 |
| | | | IT | 1090470 B | 26-06-1985 |
| DE 4233121 | A1 | 07-04-1994 | NONE | | |

EPO FORM P0459

For more details about this annex : see Official Journal of the European Patent Office, No. 12/82

**EP 1 801 077 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2132750 Y
- CN 1298018 A
- EP 0433139 A
- CA 1217581
- TW 513449
- TW 593168